# EUROPEAN PATENT SPECIFICATION

(11) **EP 0 511 025 B1**
(45) Date of publication and mention of the grant of the patent: **18.03.1998**
(21) Application number: 92303777.4
(22) Date of filing: 27.04.1992
(51) Int. Cl.: D04H 1/00, B29C 43/48, B29C 67/00, B65G 15/42

(54) **Improvements in and relating to the manufacture of non-woven fabrics**
Verbesserungen in Zusammenhang mit der Vliesstoffherstellung
Améliorations rapportant à la fabrication d'étoffes non-tissés

(30) Priority: 26.04.1991 JP 188371/91
(43) Date of publication of application: 28.10.1992
(73) Proprietor: NIPPON FILCON CO., LTD., Tokyo 154 (JP)
(72) Inventor: Kitamura, Ichihiro, c/o Nippon Filcon Co., Ltd., Inagi-Shi, Tokyo (JP); Nakajima, Tatsutoshi, c/o Nippon Filcon Co., Ltd., Inagi-Shi, Tokyo (JP)
(74) Representative: W.P. Thompson & Co.

(56) References cited:
- EP-A- 0 344 365
- WO-A-88/05838
- FR-A- 2 276 914
- FR-A- 2 276 914
- US-A- 3 274 018
- US-A- 4 840 829
- US-A- 4 995 151

## Description

The present invention relates to improvements in and relating to the manufacture of non-woven fabrics.

Conventionally, non-woven fabrics have been formed by depositing a fibre assembly onto a mesh carrier belt, such as a plain woven fabric, and then applying highly pressurized water or hot air to the fibre assembly deposited on the belt to entangle or weld the fibres together to thereby form the non-woven fabric.

It is desirable to form irregular patterns in non-woven fabric in order to provide improved touch and feel properties to the fabric. However, when using a conventional mesh belt, it is impossible to obtain irregular patterns providing touch and feel which may be sufficient to appeal, since the irregularity is provided only by the difference in height between knuckles of weft and warp of the conventional mesh belt, thereby limiting the irregularity. Therefore, it has hitherto not been possible to form a sufficient irregularity by the fabric of the belt only.

Recently, it has been considered desirable to add design patterns such as letters, numbers or characters on a non-woven fabric for the purpose of providing enhanced value to the fabric, but according to the conventional mesh belt, the formation of the patterns was restricted by the textile design of the mesh carrier belt fabric itself, so that it was difficult to provide such different formations with design patterns and irregular patterns with free formations independent of the configuration of the underlying carrier belt.

FR-A-2276914 discloses a method of fabricating non-woven material by use of a belt having regular projections thereon and use of a pressure roll to press this non-woven fabric onto the belt.

Accordingly, it is an object of the present invention to provide a belt for forming a non-woven fabric having freely designed patterns formed therein and possessing comfortable touch and feeling, as well as to provide a method of forming such a desired non-woven fabric.

The present invention relates to a belt with the following features and a method of fabricating a non-woven fabric as described.

According to the present invention there is a belt for fabricating a non-woven fabric used in a machine for manufacturing non-woven fabrics from a fibre assembly, wherein said belt is provided with a plurality of projections on the forming-side-surface of a belt body to imprint a pattern on said non-woven fabric, characterised in that the projections imprint irregular patterns and are of a larger size and a smaller size, and that the projections are made of a thermoplastic resin and are welded to said forming-side-surface of said belt body.

Preferably the height of said projections having a larger size is greater than the projections having a smaller size.

In the belt for fabricating the non-woven fabric according to the invention, the or each of the projections mounted on the forming-side-surface of the belt forms, as a whole, the pattern to be given to the non-woven fabric.

In a more detailed aspect, the belt of the invention for fabricating the non-woven fabric has the or each projection, which is mounted on the forming-side-surface of the belt body, made of thermoplastic resin and welded onto the forming-side-surface of the belt body. The welding can be accomplished by conventional methods known in the art.

The present invention also provides a method for fabricating a non-woven fabric formed with irregular patterns, in which a carrier belt having mounted thereon a plurality of projections made of thermoplastic resin on the forming-side-surface of said carrier belt is utilised, said projections having been welded to said forming-side-surfaces of said belt, a fibre assembly is deposited onto said belt which is provided with irregular patterns formed of said projections and highly pressurised water or hot air is applied to said fibre assembly in order to press said fibre assembly and entangle the fibres and in which said fibre assembly is pressed onto said projections to form patterns having larger size and smaller size, to thereby form a non-woven fabric having irregular patterns formed therein.

Preferably the depth of the patterns having a larger size being deeper than that of the patterns having smaller size.

Still further, the method for fabricating a non-woven fabric formed with irregular patterns can be carried out according to the invention, wherein the height of the patterned projections provided on the forming-side-surface of a belt body is set to be larger than the thickness of the non-woven fabric to be fabricated, and highly pressurized water or hot air is applied onto said fibre assembly on the belt body to press it onto the or each projection in order to provide holes in the resulting fabric formed by the or each projection according to a desired pattern in the fabric.

In a more detailed aspect, the method for fabricating a non-woven fabric formed with irregular patterns therein, comprises depositing a previously made non-woven fabric onto a carrier belt provided with patterned projections on a forming-side-surface of said belt, and applying highly pressurized water or hot air onto said non-woven fabric in order to press it onto said belt and thereby form irregular patterns formed in said fabric by virtue of said projections.

The belt body of the present invention is preferably made of weft and warp made of polyethylene terephthalate monofilament, and may be made of monofilament such as polyamide and polypropylene, and metallic wires such as stainless steel and bronze.

Moreover, a single layer fabric, a double layer fabric, a weft double layer fabric, or a warp double layer fabric may be used.

Further, a spiral belt which is made by connecting spiral wires, not fabric, spirally rotated with each other or connecting core wires twisted, may be used. Any other belt for making non-woven fabric on which the projections with patterns can be mounted on the forming-side-surface of the belt body can be used.

Polyurethane and polyvinylchloride resins are suitable as the materials to form the projections which establish the desired patterns, and the projections may be connected to or mounted on the belt by using a high frequency welding method or adhesive, or by welding metallic projections to a metallic fabric belt.

It is a matter of choice to select and mount projections on the underlying belt with patterns in accordance with the non-woven fabric produced in the manufacturing process. It is preferable, for providing a soft touch as well as design patterns, that somewhat smaller projections for providing the soft touch are mounted on the forming-side-surface of the belt body and somewhat larger projections for providing the desired design patterns are mounted thereon with desirable spacing to be determined according to each particular product requirement.

The present invention provides a solution for the problem in the prior art in which it was impossible to produce non-woven fabrics having a highly soft touch and additional desirable properties for the reason that the conventional irregular patterns, established by the difference in height of knuckle between the weft and the warp of the conventional mesh belt, was limited to the small knuckle difference.

With the present invention, it is possible to provide a belt with desired projections with patterns at the desired positions, and to obtain sufficient height differences and desired patterns, and thereby not to be limited by the pattern of the knuckle of weft and warp of the underlying mesh belt.

Thus, the projections with patterns are mounted on the forming-side-surface of the carrier belt body, and therefore the fibres become entangled with each other or oriented by applying highly pressurized water or hot air onto the fibre assembly on the belt body and further by movement of the fibre assembly due to the travelling movement of the belt. As a result, there is obtained a suitable height difference between the forming-side-surface of the belt body and the projections forming the patterns, thereby enabling the formation of clearly-defined irregular patterns according to the desired design in the final non-woven fabric product.

With the present invention, it is also possible to form patterns into previously produced non-woven fabrics, by depositing the non-woven fabric onto the belt of the present invention and then applying highly pressurized water to the fabric to provide the patterns, though the soft feeling is thereby somewhat deteriorated. Furthermore, in the same way, it is also possible to produce the non-woven fabric with many holes forming patterns by using the belt provided with projections, each of which has a height greater than the thickness of the non-woven fabric applied to the belt, at least when consolidated.

The invention will now be further described, by way of examples, with reference to the accompanying drawings, in which:
Fig.1 is a schematic side view illustrating the manufacturing process of a conventional non-woven fabric;
Fig.2 is an enlarged schematic side view of a belt according to the present invention, used in the manufacturing process of a non-woven fabric;
Fig.3 is a plan view of an embodiment of the belt according to the present invention;
Fig.4 is a sectional view taken along the line I-I' of Fig.3;
Fig.5 is a plan view of another embodiment of the belt according to the present invention;
Fig.6 is a plan view of a further embodiment of the belt according to the present invention;
Fig.7 is a plan view of yet another embodiment of the belt according to the present invention;
Fig.8 is a sectional view taken along the weft of a conventional belt;
Fig.9 is a similar view taken along the weft of a belt according to the present invention; and
Fig.10 is a sectional view explaining the method of applying a pattern with holes by using the belt according to the present invention.

The preferred embodiments according to the present invention will be explained in detail with reference to the accompanying drawings hereinafter.

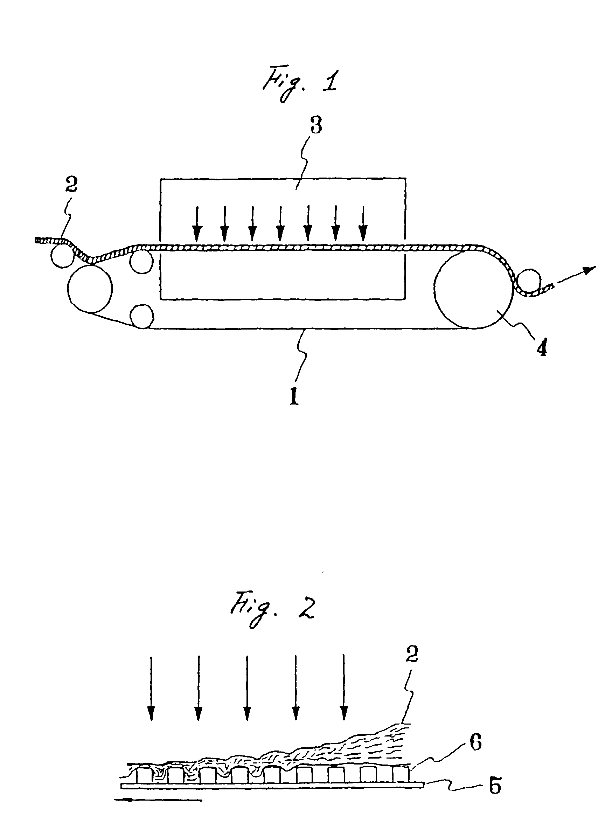

Fig.1 is a side view showing the method of fabricating a conventional non-woven fabric. Carrier belt 1 is mounted on inner rolls 4. Fibre assembly 2, which forms the non-woven fabric, is deposited onto belt 1 and is carried to zone 3 for forming the non-woven fabric thereon. In zone 3, where the non-woven fabric is formed, the arrows show highly pressurized water or hot air pressing down on the fabric assembly 2. As a result of the application of the highly pressurized water or the hot air to the fibre assembly, the fibres of the fibre assembly entangle with each other and weld together to form the non-woven fabric. Further, the fibres are oriented by the movement of the fluid due to the movement of the belt.

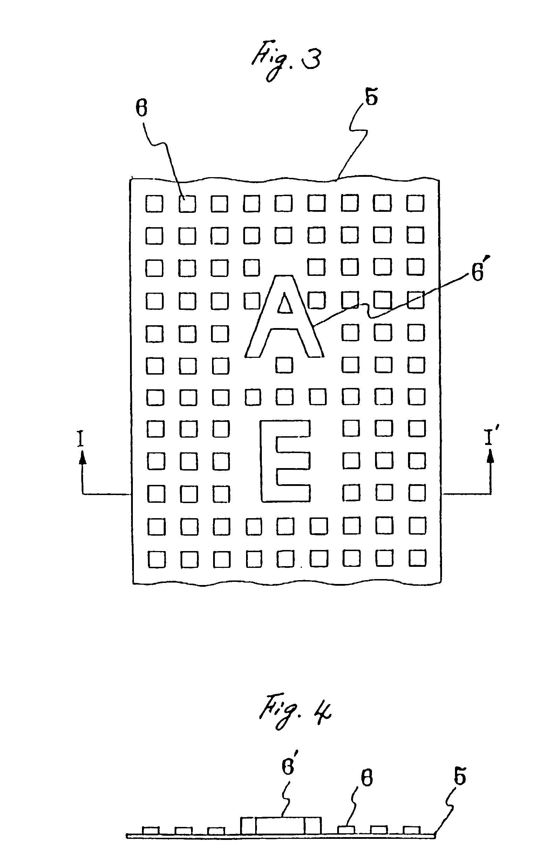

Fig.2 is an enlarged side view for explaining the manufacturing process where the non-woven fabric is fabricated by using the belt and method of the present invention. Belt body 5 is provided with projections 6 forming any desired pattern mounted on the belt body 5. As the fibre assembly 2 is carried on the belt body 5, irregular patterns are formed in accordance with the design configuration of projections 6.

Fig.3 is a plan view showing a portion of a belt according to the present invention. Belt body 5 is provided with smaller projections 6 which provide for irregular patterns imparting a soft feeling and good touch properties. The belt is also provided with larger projections 6' with patterns or shapes forming desired patterns and designs in the resulting fabric.

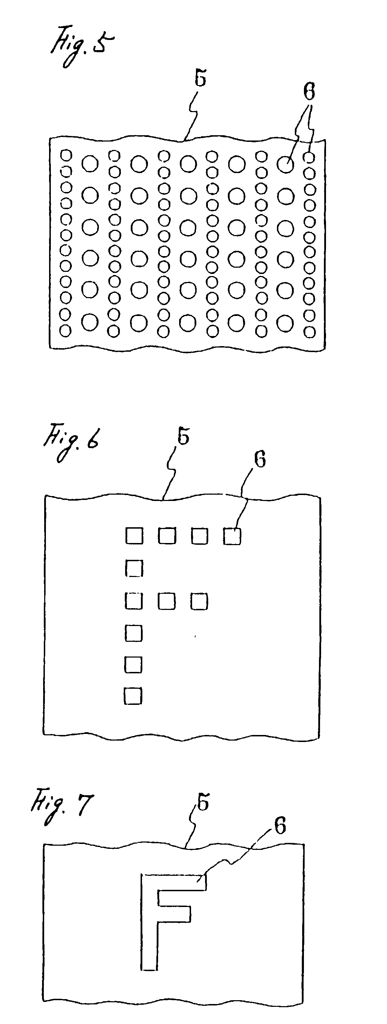

Fig.4 is a sectional view taken along the line I-I' of Fig.3, in which the difference in height between the surface of the belt body 5 and the projections, 6 and 6', forming patterns is shown. It will be understood that the differences in height may be varied freely in accordance with the desired formation of the projections.

Figs. 5, 6 and 7 are plan views showing a portion of a belt according to the present invention. In Fig.5 two kinds of circular projections 6, i.e. smaller circles and larger circles forming irregular patterns, are mounted on the forming-side-surface of the belt body 5 for providing highly soft touch and good feel characteristics.

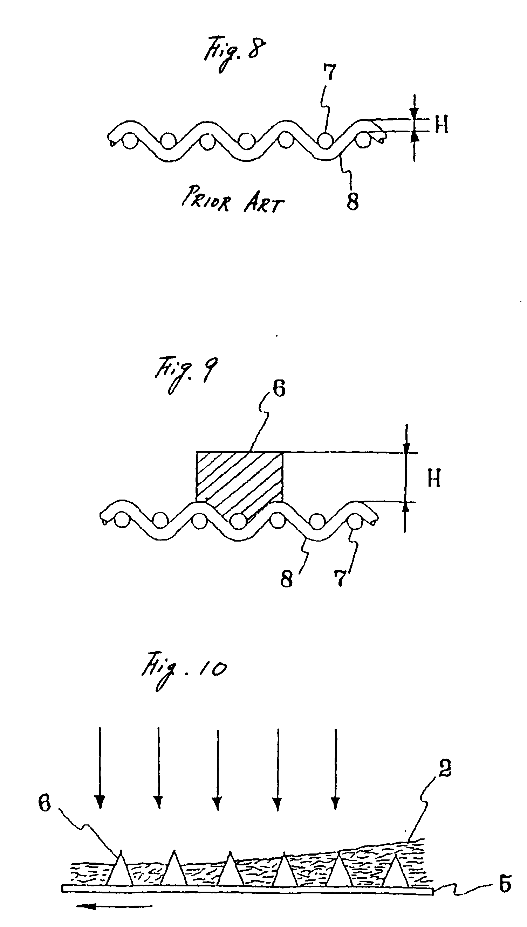

Fig.6 and Fig.7 show the belt 5 mounted with projections 6 forming patterns for providing selected designs such as letters, numbers, characters or the like, on the forming-side-surface of the belt body 5. In Fig.6 there is shown the design pattern composed of a plurality of small discrete projections, whilst in Fig.7 a unitary projection 6 per se forms a complete design pattern.

Fig.8 and Fig.9 are each sectional views showing a portion of the belt cut along the weft. In Fig.8, there is shown a conventional belt having the irregular or undulating surface exhibiting a difference H in height produced between the weft 8 and the warp 7.

Fig.9 shows a belt of the present invention, in which there is shown a similar irregular or undulatory surface but with the difference H in height existing between the top of the projection 6 and the patterns on the forming-side-surface of the belt body.

As is apparent from the comparison between Figs. 8 and 9, according to the belt of the present invention, it is possible to produce an irregularity with the height larger than that in the conventional belt, and further the height difference, the size and the formation may be varied widely.

By using the belt of the present invention having a large height difference, it is possible to form a sufficiently large irregularity in the fabric produced by the manufacturing process, and therefore obtain non-woven fabrics having soft feel and good touch properties. Furthermore, it is possible to freely select the formation of the projections with any desired patterns and the positions at which the projections are mounted, and therefore to provide all types of design patterns on the non-woven fabric.

In Fig.10, there is shown a cross-section of a belt of the present invention having provided thereon projections 6 with patterns having a height larger than the thickness of the non-woven fabric to be manufactured. The fibre assembly 2 is compressed in the direction of travel of the belt. By using such a belt, there is provided a desired pattern composed of a plurality of holes produced by the projections 6.

Any suitable fibre assembly, such as, for example, paper pulp, can be used in practising the present invention.

## Claims

1. A belt (5) for fabricating a non-woven fabric used in a machine for manufacturing non-woven fabrics from a fibre assembly (2), wherein said belt (5) is provided with a plurality of projections (6,6') on the forming-side-surface of a belt body to imprint a pattern on said non-woven fabric, characterised in that the projections (6,6') imprint irregular patterns and are of a larger size and a smaller size, and that the projections (6,6') are made of a thermoplastic resin and are welded to said forming-side-surface of said belt body.

2. A belt as claimed in claim 1 in which said projections (6,6') mounted on said forming-side-surface of said belt body form, as a whole, the pattern to be imparted to said non-woven fabric.

3. A belt as claimed in claim 1 or 2 in which the height of said projections (6') having a larger size is greater than the projections (6) having a smaller size.

4. A method for fabricating a non-woven fabric in which a carrier belt (5) having mounted thereon a plurality of projections (6,6') on its forming-side-surface is utilised, characterised in that said projections (6,6') are of a larger size and a smaller size and are made of thermoplastic resin and have been welded to said forming-side-surfaces of said belt, a fibre assembly (2) is deposited onto said belt (5) which is provided with irregular patterns formed of said projections (6,6') and highly pressurised water or hot air is applied to said fibre assembly in order to press said fibre assembly and entangle the fibres and in which said fibre assembly (2) is pressed onto said projections to form patterns having larger size and smaller size, to thereby form a non-woven fabric having irregular patterns formed therein.

5. A method for fabricating a non-woven fabric formed in which a carrier belt (5) having mounted thereon a plurality of projections (6,6') on its forming-side-surface is utilised, characterised in that said projections (6,6') are of a larger size and a smaller size and are made of a thermoplastic resin and have been welded on said forming-side-surfaces of said belt body, a previously made non-woven fabric is deposited onto said belt (5), and highly pressurised water or hot air is applied to said non-woven fabric in order to press said non-woven fabric onto said belt (5) and to thereby form irregular patterns in said fabric.

6. A method as claimed in claim 3 or 4, wherein said projections (6,6') mounted on the belt are pressed onto the fibre assembly (2) to form, as a whole, the pattern to be imparted to said non-woven fabric.

7. A method as claimed in any one of claims 4 to 6, in which the depth of the patterns having a larger size being deeper than that of the patterns having smaller size.

## Patentansprüche

1. Band (5) zum Herstellen eines Vliesstoffs, das in einer Maschine zur Herstellung von Vliesstoffen aus einer Fasermenge (2) verwendet wird, wobei das genannte Band (5) auf der formenden Seite eines Bandkörpers mit einer Mehrzahl von Ansätzen (6, 6') versehen ist, um dem genannten Vliesstoff ein Muster aufzuprägen, dadurch gekennzeichnet, daß die Ansätze (6, 6') unregelmäßige Muster aufdrücken und eine größere und eine kleinere Größe haben und daß die Ansätze (6, 6') aus einem thermoplastischen Kunstharz und auf die genannte formende Seite des genannten Bandkörpers aufgeschweißt sind.

2. Band nach Anspruch 1, bei dem die genannten, auf der genannten formenden Seite des genannten Bandkörpers angebrachten Ansätze (6, 6') insgesamt das Muster bilden, das dem genannten Vliesstoff verliehen werden soll.

3. Band nach Anspruch 1 oder 2, bei dem die genannten Ansätze (6') mit einer größeren Größe höher sind als die Ansätze (6) mit einer kleineren Größe.

4. Verfahren zum Herstellen eines Vliesstoffs, bei dem ein Trägerband (5) verwendet wird, an dessen formender Seite eine Mehrzahl von Ansätzen (6, 6') angebracht ist, dadurch gekennzeichnet, daß die genannten Ansätze (6, 6') eine größere und eine kleinere Größe haben und aus thermoplastischem Kunstharz und auf die genannten formenden Seiten des Bands aufgeschweißt sind, eine Fasermenge (2) auf das genannte Band (5) gegeben wird, das mit von den genannten Ansätzen (6, 6') geformten unregelmäßigen Mustern versehen ist, und Wasser oder Heißluft unter hohem Druck auf die genannte Fasermenge aufgebracht wird, um die genannte Fasermenge zu pressen und die Fasern zu verfitzen, und bei dem die genannte Fasermenge (2) auf die genannten Ansätze gepreßt wird, um Muster mit einer größeren und einer kleineren Größe zu formen, um dadurch einen Vliesstoff mit eingeformten unregelmäßigen Mustern zu formen.

5. Verfahren zum Herstellen eines geformten Vliesstoffs, bei dem ein Trägerband (5) verwendet wird, auf dessen formender Seite eine Mehrzahl von Ansätzen (6, 6') angebracht ist, dadurch gekennzeichnet, daß die genannten Ansätze (6, 6') eine größere und eine kleinere Größe haben und aus einem thermoplastischen Kunstharz und auf die genannten formenden Seiten des genannten Bandkörpers aufgeschweißt sind, ein zuvor hergestellter Vliesstoff auf das genannte Band (5) gegeben wird und Wasser oder Heißluft unter hohem Druck auf den genannten Vliesstoff aufgebracht wird, um den genannten Vliesstoff auf das genannte Band (5) zu pressen und dadurch unregelmäßige Muster in den genannten Stoff einzuformen.

6. Verfahren nach Anspruch 3 oder 4, bei dem die genannten am Band angebrachten Ansätze (6, 6') auf die Fasermenge (2) aufgepreßt werden, um insgesamt das dem genannten Vliesstoff zu verleihende Muster zu formen.

7. Verfahren nach einem der Ansprüche 4 bis 6, bei dem die Tiefe der Muster mit einer größeren Größe größer ist als die der Muster mit einer kleineren Größe.

## Revendications

1. Bande (5) pour la fabrication d'une étoffe non tissée utilisée dans une machine de fabrication d'étoffes non tissées à partir d'un ensemble de fibres (2), dans laquelle ladite bande (5) est pourvue d'une pluralité de saillies (6, 6') sur la surface de côté de formage d'un corps de bande afin d'imprimer un motif sur ladite étoffe non tissée, caractérisée en ce que les saillies (6, 6') impriment des motifs irréguliers et sont d'une taille plus grande et d'une taille plus petite, et en ce que les saillies (6, 6') sont faites d'une résine thermoplastique et sont soudées sur ladite surface de côté de formage dudit corps de bande.

2. Bande selon la revendication 1, dans laquelle lesdites saillies (6, 6') montées sur ladite surface de côté de formage dudit corps de bande forment, dans leur ensemble, le motif à imprimer sur ladite étoffe non tissée.

3. Bande selon la revendication 1 ou 2, dans laquelle la hauteur desdites saillies (6') ayant une taille plus grande est supérieure à celle des saillies (6) ayant une taille plus petite.

4. Procédé de fabrication d'une étoffe non tissée, dans lequel est utilisée une bande transporteuse (5) sur laquelle est montée une pluralité de saillies (6, 6') sur sa surface de côté de formage, caractérisé en ce que lesdites saillies (6, 6') sont d'une taille plus grande et d'une taille plus petite et sont faites de résine thermoplastique et sont soudées sur lesdites surfaces de côté de formage de ladite bande, un ensemble de fibres (2) est déposé sur ladite bande (5) qui est pourvue de motifs irréguliers formés par lesdites saillies (6, 6'), et de l'eau ou de l'air chaud fortement pressurisés sont appliqués sur ledit ensemble de fibres afin de presser ledit ensemble de fibres et d'enchevêtrer les fibres, et dans lequel ledit ensemble de fibres (2) est pressé contre lesdites saillies pour former des motifs ayant une taille plus grande et une taille plus petite, de manière à former une étoffe non tissée dans laquelle sont formés des motifs irréguliers.

5. Procédé de fabrication d'une étoffe non tissée dans lequel est utilisée une bande transporteuse (5) sur laquelle est montée une pluralité de saillies (6, 6') sur sa surface de côté de formage, caractérisé en ce que lesdites saillies (6, 6') sont d'une taille plus grande et d'une taille plus petite et sont faites d'une résine thermoplastique et ont été soudées sur lesdites surfaces de côté de formage dudit corps de bande, une étoffe non tissée préalablement fabriquée est déposée sur ladite bande (5), et de l'eau ou de l'air chaud fortement pressurisés sont appliqués à ladite étoffe non tissée afin de presser ladite étoffe non tissée sur ladite bande (5), de manière à former des motifs irréguliers dans ladite étoffe.

6. Procédé selon la revendication 3 ou 4, dans lequel lesdites saillies (6, 6') montées sur la bande sont pressées sur l'ensemble de fibres (2) afin de former, dans leur ensemble, le motif à imprimer dans ladite étoffe non tissée.

7. Procédé selon l'une quelconque des revendications 4 à 6, dans lequel la profondeur des motifs ayant une taille plus grande est plus profonde que celle des motifs ayant une taille plus petite.
